# EUROPEAN PATENT APPLICATION

(11) **EP 1 413 748 A1**
(43) Date of publication of application: **28.04.2004**
(21) Application number: 02079432.7
(22) Date of filing: 22.10.2002
(51) Int. Cl.: F03D 3/04, F03D 3/06, F03D 7/02

(54) **Vertical axis turbine with wind channeling means**

(71) Applicant: Dixi Holding b.v., 7241 HZ Lochem (NL)
(72) Inventor: Sidler, Hendrikus Antonius, 7241 HZ Lochem (NL); Sidler, Martinus Antonius Walterus, 3995 EK Houten (NL)

(57) **Abstract**

The invention relates to a further improved vertical axis wind turbine [FWAT] (1), in which this device mainly consists of a central axis (2), aerodynamic blades (4), spokes (3,5 and 6) and specific connecting parts (7,8), in which all parts are aerodynamically shaped, and in which the so called tip speed ratio λ is optimised between 2.5 and 4, which can be controlled to optimum efficiency without the need for a wind measuring device and in which the aerodynamic parts are of materials that combine a low specific weight with a high tensile strength.
Additionally, two diffuser elements (10,11) are placed vertically on either side of rotor, of greater height than the rotor.

## Description

The present invention is a further optimization of the "Improved VAWT" of the Dutch Patent number 1017006, filed December 29^{th}, 2000 filed by C.O.R.E. International B.V., Heuvelenweg 18, 7241 HZ Lochem, with the same applicants/inventors: Sidler, H.F.A. from Lochem and Sidler, M.A.W. from Utrecht.

The device described in that patent is a VAWT that converts energy from the wind into mechanical energy, by means of helical blades of a symmetrical aerodynamic cross-section, placed tangential at a distance R from the vertical central axis, over a height H and with an angle α to the vertical, designed with a tip speed ratio λ of a value such that stall does not occur, followed by a conversion of the mechanical energy into electrical energy. The state of the art in this case is described in above mentioned patent. This application is a further inventive improvement of that quoted patent document PCT/NL01/00763, that is continued and supplied with an international survey report. It concerns a VAWT intended for optimally converting wind energy into electrical energy.

There are two basic wind turbine designs, the Horizontal Axis Wind Turbine (HAWT) and the Vertical Axis Wind Turbine (VAWT); in the latter design a further distinction can be made between Darrieus - and Savonius type VAWT's.

The aim of the present invention is to develop a wind turbine with a minimum of auxiliary system such as a yawing mechanism and/or an anti cable twist provision in order to reduce the cost price and maintenance. The mentioned auxiliary systems are inherent to HAWT's, having as further disadvantages a rather high noise level due to the high tip speeds and tower rebound and visual hinder as a consequence of its perceptible continuous monotonous movement.

Therefore the present invention is based on a VAWT design. The choice has been made for a Darrieus type - a lift or aerodynamic rotor - above the Savonius rotor - a resistance or impulse type rotor - because of the higher conversion efficiency of the Darrieus type rotor. According to Betz law the maximum efficiency of a Savonius rotor is maximally 19% whereas the maximum efficiency of a Darrieus type rotor can be maximally 59%. The main difference between both types of VAWT's is the tip speed ratio λ. For a Savonius type VAWT is λ<1, whilst for a Darrieus type VAWT normally λ>5. Due to its higher tip speed ratio the noise level of Darrieus type VAWT's is higher than that of Savonius type VAWT's and the Darrieus type VAWT is known to have a high vibration level.

With the present invention the above mentioned disadvantages should be solved by reducing the causes of the noise production and vibrations. Actually the characteristics of the Darrieus type VAWT, in this case the Turby wind turbine of C.O.R.E. International according to the known art, being the "Improved vertical axis wind turbine" must be further analysed to detect the causes of the disadvantages and solutions should be offered to overcome these disadvantages in an inventive way as has been done in this patent document.

The characteristics which play a major role, as well as independently as in combination, can be summarized as follows:

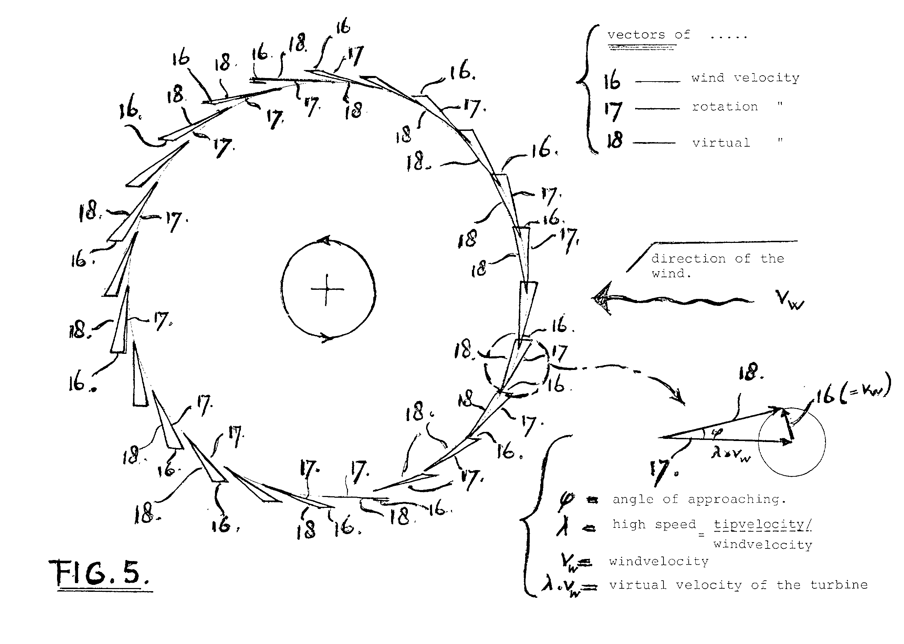

The most important aspect is the tip speed ratio λ. In this analysis ϕ is the angle of approach between the apparent wind direction and the axis of symmetry of the aerodynamic profile of the blade. In a vector diagram it can be shown how the angle ϕ varies over a complete revolution of the blade (figure 5).

In the diagram the apparent wind is construed and in the vector diagram (5b) at the right bottom side of the page the resulting conclusion is presented; The tip speed ratio λ has to exceed a minimum value so that the angle ϕ stays low enough to prevent stall. The tip speed ratio λ is defined as the quotient of the maximum speed of any point of the blade over the wind speed. Based upon the mentioned patent for an "Improved VAWT" it is clear that for the described turbine - the Turby - the speed of each and every part of the blades is similar and that thus the tip speed is equal to the blade speed. By choosing a sufficiently high tip speed ratio the occurrence of stall can virtually be eliminated on any part of the blade.

The tip speed ratio is determined by the extent of coverage of the rotor surface by the blade surface. The lower that value, the higher the tip speed ratio and the higher the coverage the lower the tip speed ratio. The minimum tip speed ratio to be met is determined by the blade profile. Thus, increasing the tip speed ratio results in narrow blades with a smaller cross-section and a lower specific mass per unit of length. On the other hand the rotational speed is higher and since the occurring centrifugal forces are proportional to the product of the mass with the square of the rotational speed the centrifugal forces increase with narrower blades. Therefore the centrifugal forces are basically proportional to the tip speed ratio. The stiffness of the blades is proportional to the width of the profile to the third power, therefore, given a certain profile, the stiffness greatly strongly with a decreasing size. Al these aspects lead to a preference for a large blade profile, whilst noise and vibration requirements demand a small profile. The only independent parameter is the choice of the blade material, its specific weight and strength. The choice of material determines the possibility to build a turbine with the required properties.

A further important aspect is the angular displacement of the blades. Theoretically it is proven that vibrations are minimal at an angular displacement of 180/n degrees, in which n is the number of blades. This angular displacement is independent of the diameter and/or the height of the rotor.

Another important aspect is the connection of the blades to the spokes connecting them to the shaft. In order to keep the sound level low and the efficiency high the parts connecting the blades to the spokes should be of an aerodynamic profile forming a gradual transition from the blade profile to the spoke profile.

The control system should bring the turbine - at any wind speed - to its point of maximum efficiency - by loading the turbine such that it runs just at its optimal performance point. Such a control can be easily realized by measuring the wind speed and determining the optimal load for that wind speed from a database. However, measuring the wind speed with sufficient accuracy for the required control normally requires a measuring device that is both expensive and likely to be vulnerable, therefore an alternative and reliable method has been developed in the present patent documents by which the need for wind speed measurement has been eliminated.

A diffuser contributes greatly to an improved performance of the VAWT and can be further developed for optimal results as described in this patent document.

Diffuser elements have been developed which are placed parallel and diametrically opposite to the axis. Further it has been found that the diffuser placed in a fixed position can be used as a supporting framework for the VAWT with a noticeable improvement in performance.

From the above it is apparent, that the known state of the art offers ample room for improvement of the existing type of VAWT's. For this reason the already known VAWT, named Turby, is further developed in a very inventive way characterised as follows, in which:
- The mentioned tip speed ratio λ is between 2 and 6.
- The mentioned angular displacement α is equal to 180/n degrees, in which n is the number of blades.
- The blades are connected to the axis by means of spokes of an aerodynamic profile.
- The connection between blades and spokes takes place by means of a continuous aerodynamic transition from the aerodynamic blade form to the aerodynamic spoke form.
- As mentioned above, that transition is executed with a small curvature radius of the aerodynamic shaped blade to the aerodynamic shaped spoke.
- The part forming the connection between blade and spoke can be made as one piece or composed from several parts.
- The required tip speed ratio λ is derived from the speed of rotation of the rotor and its first- and second derivative related to the power curve of the VAWT.
- Two diffuser elements are used placed parallel and diametrically opposite to the vertical axis with a height greater than the rotor height.
- The material of the aerodynamic shaped blades, spoke profile and connecting parts have a low specific weight in combination with a high mechanical strength.
The advantage being a VAWT with a high conversion efficiency, a low noise level, no vibrations and not forming a visual hindrance.

Following the device according to the invention it is further developed in such a way, that the mentioned optimum tip speed ratio λ = 3 - 4 and that the mentioned number of blades lies between 2 and 8 and is preferably 3 or 5. The advantages are that no, or hardly any stall occurs and that the turbine combines a high output with no vibrations and almost no noise.

Further, the device is developed in such a way that the material of the aerodynamically shaped blades, spokes and connecting parts can be aluminium Al, magnesium Mg, titanium Ti, or alloys of these metals, or are of composite material such as carbon epoxy and/or fibreglass.

The advantage is a very light - but strong - construction able to withstand the high centrifugal forces produced by the high rotational speed of the rotor.

Furthermore, the device according to the invention is further developed in such a way that a diffuser with an axial prismatic shape is mounted vertically on both sides of the rotor with a cross-section that can be a circle, an aerodynamic profile, or kidney shaped.

The advantage is a further increase of the efficiency and output of the turbine.

The preferred construction of the invention will be described by way of example, and with reference to the accompanying drawing, in which:
- Fig. 1: shows a side view in oblique projection of only the further improved VAWT, according to a preferred embodiment of the invention;
- Fig. 2: shows the further improved VAWT of figure 1 in side view;
- Fig. 3: shows the further improved VAWT of figure 1, provided with two vertical diffuser elements;
- Fig. 4: shows a top view of the VAWT of figure 3 with different diffuser cross-sections; and
- Fig. 5: shows a graphic representation of the relation between the actual wind vector, the tangential speed of the blades and the resulting apparent wind vector acting on the blades.

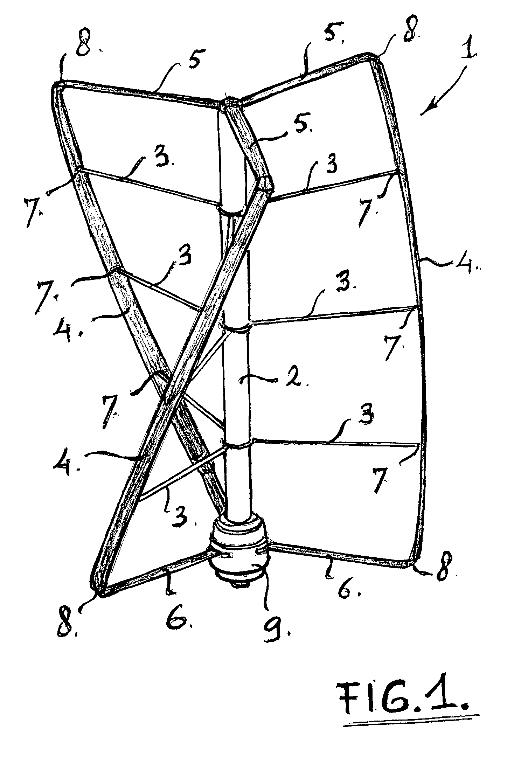

- Fig. 1: shows a side view in oblique projection of only the further improved VAWT 1, according to a preferred embodiment of the invention, in which this mainly consists of a central vertical axis 2, the aerodynamic spoke profiles 3, the helical aerodynamic blades 4, and the upper and bottom aerodynamic blades 5, 6 in which the aerodynamic blades are connected with the aerodynamic spokes by the specific connection parts 7, 8. Integrated in the further improved VAWT 1 is the generator 9 that converts the mechanical energy into electric power. The cabling and control equipment are not shown.

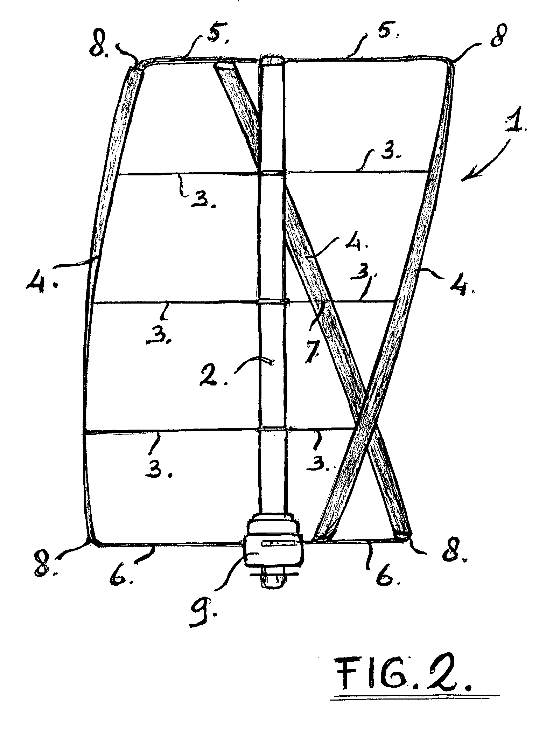

- Fig. 2: shows in side view the further improved VAWT 1. For the same parts the same indication numbers are used in all figures.

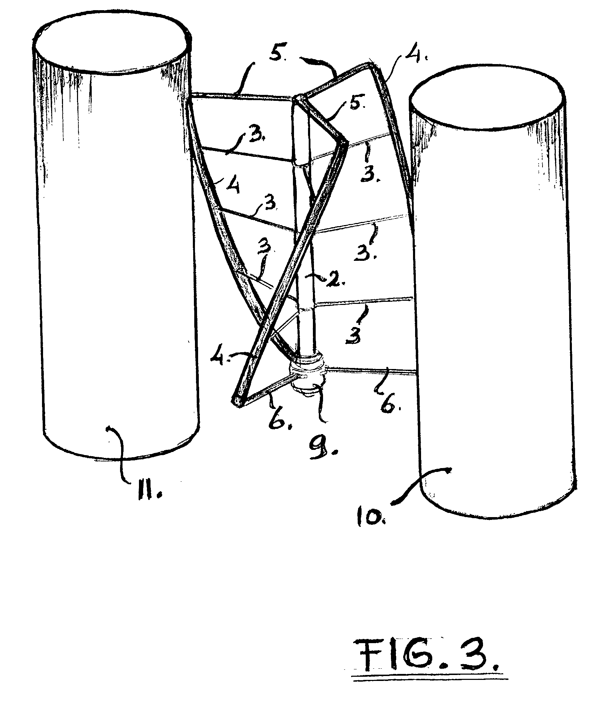

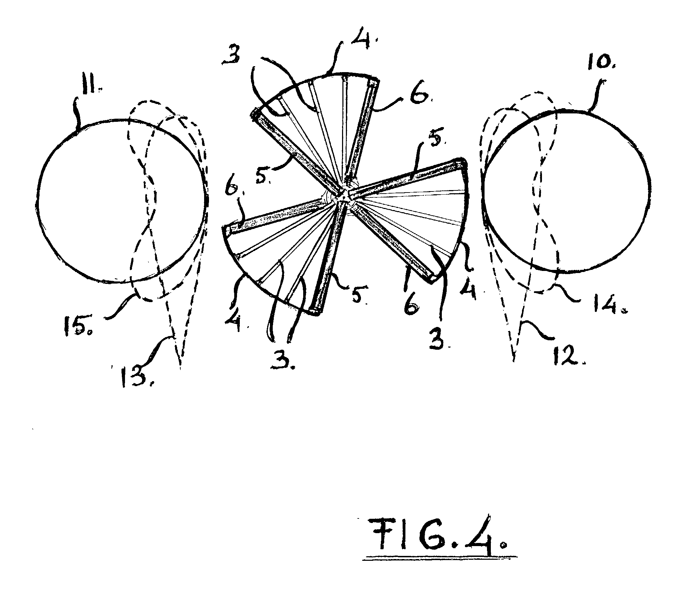

- Fig. 3: shows, in oblique projection the further improved VAWT which is also supplied with two vertical diffuser elements 10, 11. The shown vertical diffuser elements have a circle shaped cross-section. The cross-section can also be wing shaped 12, 13, or kidney shaped 14, 15 as shown in figure 4.
- Fig. 5: shows the graphic representation of the relation between the vector representing the wind speed and direction 16 (V_{w}), the vector representing the tangential blade speed 17 and direction (V_{b}) and the resulting apparent wind speed and direction acting on the blade, in which the tip speed ratio λ - the quotient of the blade speed and the wind speed, - forms the basis 18 of the triangle in the vector diagram. In this figure ϕ represents the angle of approach, λ the tip speed ratio and V_{w} the wind speed.

Finally it has to be emphasized, the above description constitutes a preferred embodiment of the present invention and that further variations and modifications are still possible without departing from the scope of this patent description.

## Claims

1. Device in which the vertical axis wind turbine [VAWT] (1) is further optimized, in which the wind exerts lifting forces on, - at distance R over a height H mounted aerodynamic blades, - built in such a way that a tip speed ratio λ results of a value such that no, or hardly any, stall occurs, in which the helical formed aerodynamic blades (4) are angularly displaced over an angle α between top and bottom of the blade, **characterized in that,** the mentioned tip speed λ has a value between 2 and 6 and in which the angular displacement α is given by the formulae: 180/n degrees, in which n is the number of aerodynamic blades and in which the mentioned aerodynamic blades are connected at a distance x by means of aerodynamic spokes (3, 5, 6) to the central shaft, in which the connection between blades (4) and spokes (3, 5, 6) takes place by means of parts (7 and 8) formed such that it forms a continuous aerodynamic transition from the aerodynamic blade form to the aerodynamic spoke form, in which the control of the tip speed ratio λ is derived from the rotational speed of the rotor and from the first- and second derivative of the rotational speed of the rotor in relation to the power curve of the turbine, without the need for a wind speed measuring device, in which as an option two diffuser elements can be placed vertically and diametrically opposite to the vertical axis having a vertical dimension greater than the vertical dimension of the rotor height, in which the material of the aerodynamic blades, spokes and connecting parts has a low specific weight in combination with a high tensile strength.

2. Device as claimed in claim 1, **characterized in that**, the mentioned tip speed ratio λ is situated between 2,5 and 4.

3. Device as claimed in claim 1, **characterized in that**, the number of blades n is between 2 and 8, and is preferably either 3 or 5.

4. Device as claimed in claim 1, **characterized in that**, the cross-section of mentioned spokes (3, 5, 6) is of an aerodynamic form.

5. Device as claimed in claims 1 and 2, **characterized in that**, the control of the VAWT to its efficiency is executed electrically by regulating the load of the turbine as a function of the rotational speed of the rotor and its first and second derivative without measurement of wind speed.

6. Device as claimed in claim 1, **characterized in that**, the material of the aerodynamic blades (4), the spokes (3, 5, 6) and the connecting parts (7, 8) can be of aluminium (Al), magnesium (Mg), titanium (Ti), or a composite material such as carbon epoxy or fibreglass.

7. Device as claimed in aforementioned claims, **characterized in that**, diffuser elements (10, 11, 12, 13, 14, 15) with an axial prismatic shape are mounted in parallel, diametrically opposite the axis, with a cross-section that can be circular, aerodynamically-, kidney shaped or such other shape as may be deemed appropriate.
